# EUROPEAN PATENT SPECIFICATION

(11) **EP 3 772 887 B1**
(45) Date of publication and mention of the grant of the patent: **10.12.2025**
(21) Application number: 19716160.7
(22) Date of filing: 09.04.2019
(51) Int. Cl.: G05D 1/00, B60K 7/00, B60K 1/00, B60G 1/00, B60G 7/04, B60G 9/02, A01D 34/00, B60B 35/00, B60B 35/04, B60B 35/12, B60B 35/14, B60B 35/16

(54) **ROBOT AND METHOD FOR CONTROLLING THE ROBOT**
ROBOTER UND VERFAHREN ZUR STEUERUNG DES ROBOTERS
ROBOT ET PROCÉDÉ DE COMMANDE DU ROBOT

(30) Priority: 09.04.2018 WO PCT/EP2018/058991
(43) Date of publication of application: 17.02.2021
(73) Proprietor: Vitirover, 33330 Saint-Emilion (FR)
(72) Inventor: DAVID BEAULIEU, Xavier, 33330 SAINT-EMILION (FR)
(74) Representative: IP Trust
(86) International application number: PCT/EP2019/058942
(87) International publication number: WO 2019/197397

(56) References cited:
- WO-A1-2015/002539
- US-B2- 6 783 187
- "Vitirover", YOUTUBE, 19 January 2013 (2013-01-19), pages 1 pp., XP054979525, Retrieved from the Internet <URL:https://www.youtube.com/watch?v=xRE8oRMyY2g> [retrieved on 20190712]
- COMMUNAUTÉ DE COMMUNES DE MONTESQUIEU: "Vitirover - Lauréat 2008", YOUTUBE, 8 December 2017 (2017-12-08), pages 1 pp., XP054979526, Retrieved from the Internet <URL:https://www.youtube.com/watch?v=bhx4y2IAY7Q> [retrieved on 20190712]

## Description

### Field of the invention

The invention relates to a robot having a chassis and a method for controlling the robot.

### Object of the invention

The invention is set forth in the independent claim 1 and in the dependent claims 2 to 24.

An object of the invention is, in particular, to provide a robot with a low propulsion consumption.

The video available on https://www.youtube.com/watch?v=xRE8oRMyY2g shows an example of a prior art robot. Another example could be found in WO 2015/002539.

### Summary of the invention

To this effect, according to a first aspect of the invention, the invention relates to, robot comprising a first axle and a second axle, the first axle housing comprising a first transversal axle connected to a rigid structure by a hinge having a first degree of freedom in rotation around a first axis which is vertical and a second degree of freedom in rotation around a second axis which is perpendicular to the first axis and to the first transversal axis, and the axle of the first transversal axle being equipped on either side with a motor, each motor having a stator part intended for to be fixed to the first transversal axle and a rotor part to be rotatably mounted to a respective wheel to provide steering and propulsion functions.

The robot might be further arranged to receive electronic controls configured to control each of the motors fitted to said axle housing.

According to further non-limitative features of the invention, either taken alone or in all technically feasible combinations:
- the electronic controls are configured to drive each motor independently;
- the hinge is placed on the center of the transversal axis;
- the center of gravity of the robot is located between the four wheels;
- the chassis is shell that goes down between the two axles to lower the center of gravity;
- the rigid structure is a shell;
- the robot comprises a unique battery;
- the robot comprises a frontal cutting module place between two wheels, either on the front or on the rear of the robot, and the two other wheels are steering wheels;
- the 4 wheels are driving wheels;
- the electronic controls are configured to implement a robot moving strategy towards a predetermined destination point by minimization of the distance to the predetermined destination point, the strategy being locally random;
- the robot comprises means for detecting an obstacle.
- the means for detecting the obstacle are configured to detect an obstacle by combination of two or more of the following parameters:
   ∘ counter electromotive force of one of the motor;
   ∘ differential of inertial components for detection of acceleration and / or acceleration variation;
   ∘ angular sensor of steering wheels;
   ∘ geographical localization;
- the electronic controls are configured to invert the direction of movement of the robot when an obstacle is detected.
- the robot comprises a frontal cutting module place between two wheels, and, in the event that the obstacle detected is on the side of the cutting tool, the electronic controls are configured to stop the robot and to select a steering direction to circumvent the obstacle before inverting the direction of the movement;
- the robot comprises an angular sensor of the angle formed by the transverse axis relative to the frame, said angular sensor comprising a flag fixed in rotation with the first axis and a rangefinder to measure the distance between the flag and a fixed point of the rigid structure.

Preferably, the axle housing is rotatable around two axes of rotation with respect to a chassis of the robot.

The robot might comprise a stop device for circumscribing in space the displacements of the rear axle.

Preferably, the stop device comprises a plate of rectangular shape defining a main plane and a center of the rectangular shape.

According to an embodiment, the plane orthogonal to the main plane and extending in the longitudinal direction of the plate and passing through the center of the rectangle is a plane of symmetry of the stop device.

Preferably, the plane orthogonal to the main plane and extending in the direction transverse to the longitudinal direction of the plate and passing through the center of the rectangle is a plane of symmetry of the stop device.

For example, four screw passages may be formed at the corners of a rectangle centered on the center of the plate.

On an embodiment, four damper passages are formed in the plate at the corners of a rectangle centered on the center of the plate.

Preferably, the stop device has four stops distributed symmetrically with respect to the two planes of symmetry of the stop device.

For example, a stop has a right-angled triangle section whose right angle is disposed at one end of the rectangle forming the plate, one side of the right angle being oriented in the longitudinal direction of the plate, the other side the right angle being directed in the direction of a longitudinal plane perpendicular to the main plane.

Preferably, a vertical section transverse to the longitudinal direction of the plate, the plate is hollowed out on a lower central portion to form a "Π" which upper left and right interior angles are provided with fillets.

The invention also relates to a method of controlling a robot comprising an axle housing arranged to receive two wheels and intended to provide steering and propulsion functions of said two wheels, said method comprising to control two motors which are housed in said axle housing, on either side, each motor having a stator part intended for to be fixed to the axle housing and a rotor part to be rotatably mounted to said wheel, said robot being further arranged to receive control electronics configured to control each of the motors fitted to said axle housing.

### Figures

Many other features and advantages of the present invention will become apparent from reading the following detailed description, when considered in conjunction with the accompanying drawings, in which:
- Figure 1 is a perspective view of a mowing robot according to the invention;
- Figure 2 is a perspective view of the bottom of the robot of Figure 1;

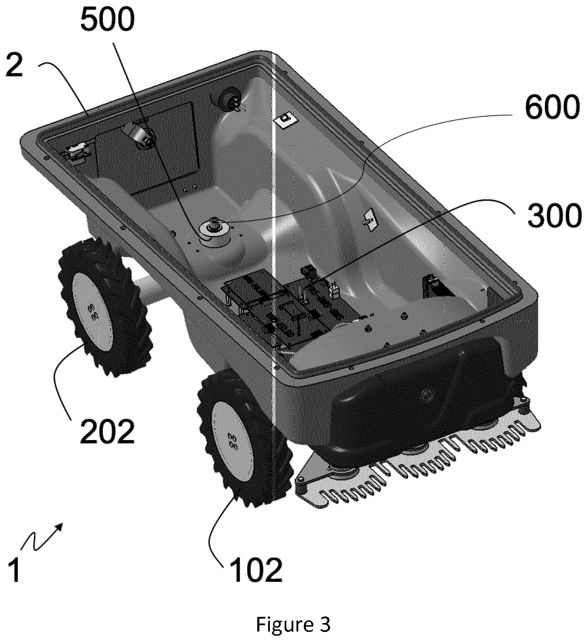

- Figure 3 is another perspective view of Figure 1;

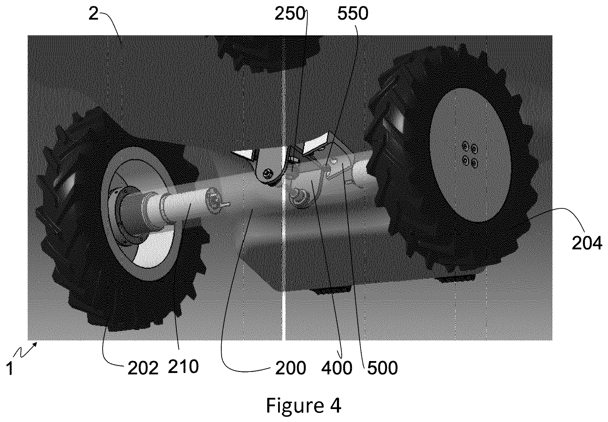

- Figure 4 is a perspective view of the bottom of the robot of Figure 1;

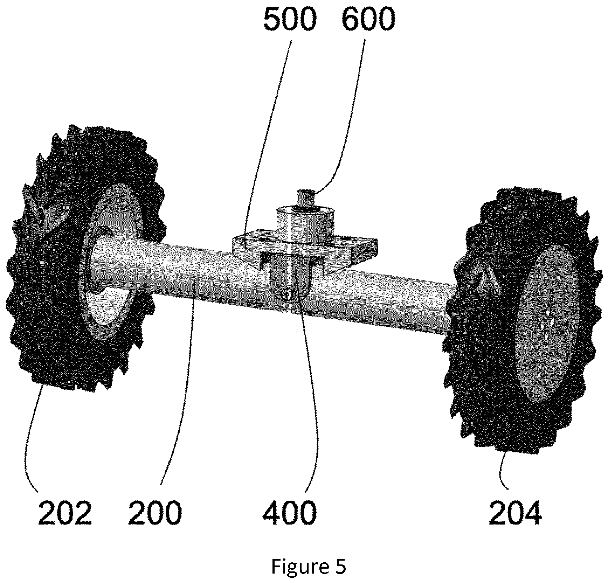

- Figure 5 is a perspective view of the rear axle of the robot of Figure 1;
- Figure 6 is a perspective view of a stop element of the rear axle of Figure 5;
- Figure 7 is a perspective view and a down section of a stop element of Figure 6;
- Figure 8 is a multi-view projection, front, top and bottom, left and right, of the stop element of Figure 6;
- Figure 9 is a perspective view, from the top of the robot of Figure 1.

### Detailed description of specific embodiments of the invention

The embodiments described hereinafter being in no way limiting, it is possible in particular to consider variants of the invention comprising only a selection of characteristics described, subsequently isolated from the other characteristics described, if this selection of characteristics is sufficient to confer a technical advantage or to differentiate the invention from the state of the art. This selection comprises at least one characteristic, preferably functional without structural details, or with only a part of the structural details if this part only is sufficient to confer a technical advantage or to differentiate the invention from the prior art.

The same references are used for identical elements or elements achieving the same function in the different embodiments of the invention that will be described.

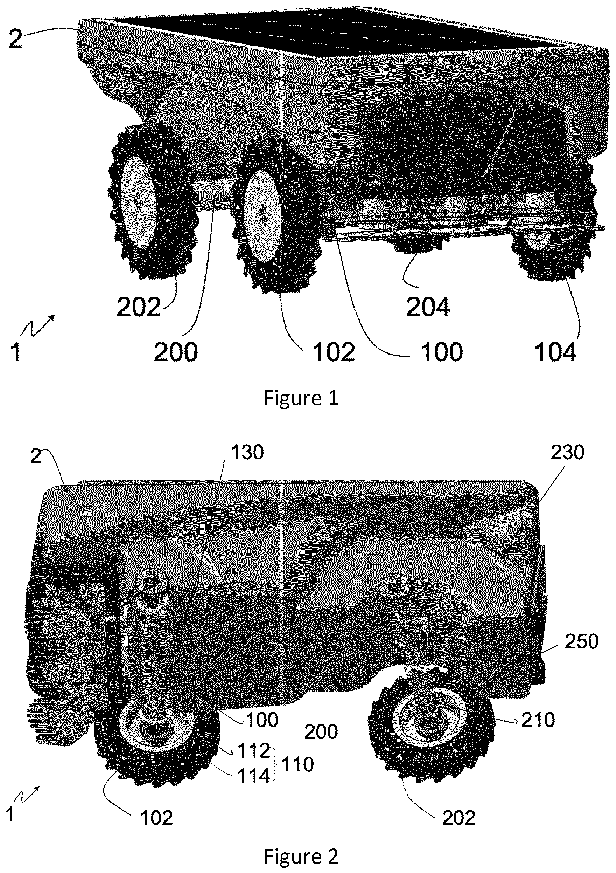

Figure 1 is a perspective view of a mowing robot 1 according to the invention.

The mowing robot 1 is autonomous in energy and comprises a unique battery.

The mowing robot 1 comprises a chassis 2, which is a rigid structure, preferably a shell, which is linked to a front axle housing 100 and to a rear axle housing 200.

The front axle housing 100 is fixed to the chassis 2.

The front axle housing 100 is linked to two front wheels 102 and 104, which are rotating around the front axle housing 3.

At the end of the front axle housing 100 at the wheel 102, the front axle housing 100 comprises a motor 110.

The stator part 112 of the motor is fixed to the front axle housing 100 via a radially external part of a bearing 120 (no shown on the figures). The wheel 102 is fixed to a rotatory part 114 of the motor 110 via the radially internal part of the bearing 120.

At the end of the front axle housing 100 at the wheel 104, the front axle housing 100 comprises a motor 130.

The stator part 132 (not shown on the figures) of the motor is fixed to the front axle housing 100 via a radially external part of a bearing 140 (not shown on the figures). The wheel 104 is fixed to a rotatory part 134 (not shown on the figures) of the motor 130 via the radially internal part of the bearing 120.

A cable duct 150 is provided to pass electrical wires, which are not shown in the figures, connected to the motors 110 and 130.

The rear axle housing 200 is linked to two rear wheels 202 and 204, which are rotating around the rear axle housing 200.

The rear axle housing 200 defines a first transversal axle.

At the end of the rear axle housing 200 at the wheel 202, the rear axle housing 200 comprises a motor 210.

The stator part 212 (not shown on the figures) of the motor is fixed to the rear axle housing 200 via a radially external part of a bearing 220 (not shown on the figures). The wheel 202 is fixed to a rotatory part 214 (not shown on the figures) of the motor 210 via the radially internal part of the bearing 220.

At the end of the rear axle housing 200 at the wheel 204, the front axle housing 100 comprises a motor 230.

The stator part 232 (not shown on the figures) of the motor is fixed to the front axle housing 200 via a radially external part of a bearing 240 (no shown on the figures). The wheel 204 is fixed to a rotatory part 234 (not shown on the figures) of the motor 230 via the radially internal part of the bearing 220.

Each motor has its stator part fixed to the first transversal axle and its rotor part (brush, brushless) rotatably mounted to a respective wheel (202, 204) to provide steering and propulsion functions.

A cable duct 250 is provided to pass electrical wires connected to the motors 210 and 230 which are not shown in the figures.

The rear axle housing 200 is pivotally mounted on a steering pivot 400 around a horizontal axis, which is perpendicular to the longitudinal axis of the rear axle housing 200.

The steering pivot 400 is pivotally mounted on a blocking device 500 around a vertical axis.

Thus, the rear axle is connected to the rigid structure 2 by a hinge having a first degree of freedom in rotation around a first axis - the vertical axis - which is vertical and a second degree of freedom in rotation around a second axis - the horizontal axis - which is perpendicular to the first axis and to the transversal axis.

The hinge is placed on the center of the transversal axis.

The shell 2 goes down between the two axles to lower the center of gravity.

The center of gravity of the robot 2 is located between the four wheels 102, 104, 202, 204.

The four wheels 102, 104, 202, 204 are driving wheels.

The robot 2 comprises a frontal cutting module located between two wheels 102, 104, on the front of the robot.

However, only the two wheels 102, 104, which are located opposite from the frontal cutting module are steering wheels. This is useful to maximize the width of the fontal cutting module.

The wheels between which the cutting module is located are only driving wheels, not steering wheels.

The blocking device 500 is adapted to circumscribe in space the displacements of the rear axle housing 200. The blocking device 500 comprises four damping devices 550, as rubber. The damping devices help to ensure long life for the blocking device.

The blocking device 500 device is fixed on the chassis 2.

Therefore, the chassis 2 can rotate around the forward driving direction and around the vertical direction.

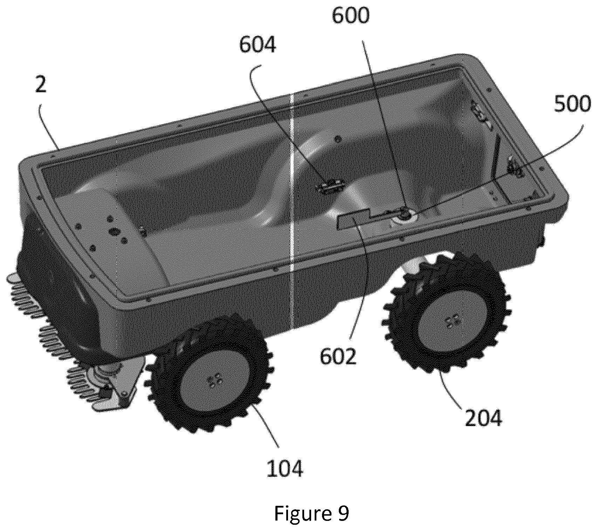

As it might better seen on Figure 9, The steering pivot 400 is extended by a tube 600 opening into the chassis 2. The tube 600 forms cable duct 600 provided to pass electrical wires, which are not shown in the figures, connected to the motors 210 and 230.

The tube 600 is rotationally integral with a flag 602.

The chassis 2 is further provided with a sensor 604 for the angular position of the flag 602. In the example shown in Figure 9, the sensor 604 of the angular position of the flag 602 is a rangefinder.

The rangefinder 604 emits an infrared wave that is reflected on the flag602, linked to the axis of the rear axle. The value received by the rangefinder changes according to the distance of the reflective object which is the flag. When the rear axle moves angularly around the vertical axis, the distance of the flag from the rangefinder changes. We can therefore measure the angular position of the rear train.

Therefore, the motors 210, 230, are controlled by a controller 300 which is fixed to the chassis 2.

The data provided by the sensor of the angular position of the flag 602 are sent to the controller 300.

Therefore, the robot comprises an angular sensor of the angle formed by the transverse axis relative to the frame, the angular sensor comprising the flag 602 fixed in rotation with the first axis and a rangefinder 604 to measure the distance between the flag and a fixed point of the rigid structure 2.

Therefore, the angular position of the free rear train is known and the robot might be driven.

The controller 300 controls the motors 210 and 230, independently, in order to change the direction of the mowing robot 1, by pivoting the chassis 2 around the rear axle housing. Therefore, the rear axle housing is a drive and steering axle.

In order to rotate the chassis 2 around the rear axle housing, the controller 300 is configured to control the motors 210 and 230 with two different speed rotations.

The motors 110, 130, are also controlled, independently, by the controller 300.

In this embodiment, the controller 300 is configured to control the motors 110 and 130 with a same speed rotation. Therefore, the front axle housing is a drive axle but not a steering axle.

The electronic controls 300 are configured to implement a robot moving strategy towards a predetermined destination point by minimization of the distance to the predetermined destination point, the strategy being locally random.

The moving strategy might consider the distance to the border of the fields on which is placed the robot.

To this end, the robot might consider the geolocation border and the accuracy of the GPS.

The moving strategy might be an opportunistic random displacement locally, mainly opportunistic.

The moving strategy might implement derogations to the minimization, by learning derogations by historical data.

The moving strategy might implement corner strategy by inversion of changing the predetermined destination point after a given period.

The robot might comprise means for detecting an obstacle.

On the embodiment, the electronic controls form part of the means for detecting an obstacle.

The electronic controls are further configured to detect an obstacle by combination of two or more of the following parameters:
- counter electromotive force of one of the motors;
- differential of inertial components (the robot might comprise an IMU or accelerometers, compass and gyroscopic sensors) for detection of acceleration and / or acceleration variation [inconvenience: very noisy];
- angular sensor of steering wheels known from the flag 602 and the rangefinder 604,
- geographical localization (for example GPS).

The electronic controls 300 might be configured to invert the direction of movement of the robot when an obstacle is detected.

In the event that an obstacle detected is on the side of the cutting tool, the electronic controls are configured to stop the robot and to select a steering direction to circumvent the obstacle before inverting the direction of the movement.

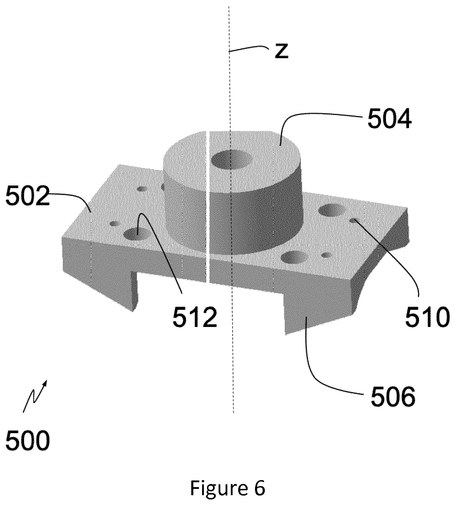

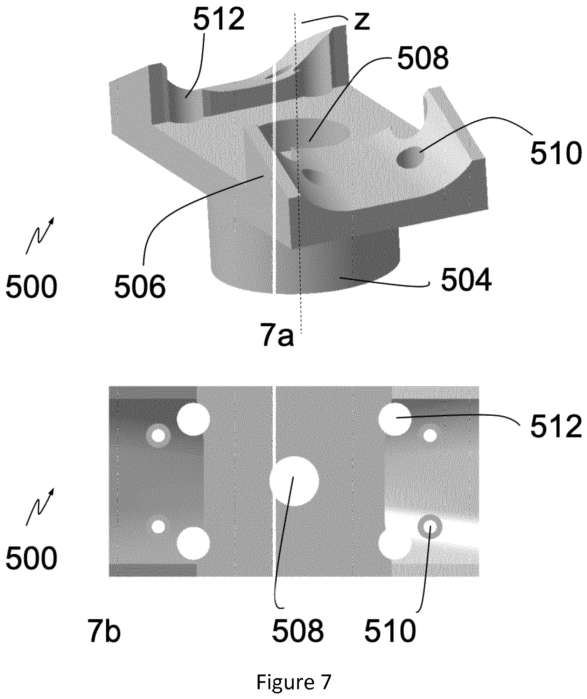

The blocking device 500 might be better seen on Figures 6 and 7.

The device 500 comprises a plate 502 of rectangular shape centered around a vertical axis z. The plate has a main plane extending in both directions of its rectangular shape.

The device 500 comprises on one side of the plate 502 with respect to the z axis, a cylinder 504 of annular section. The outer diameter of the annular section is smaller than the width of the plate 502. The inside diameter of the annular section is sufficient to allow a passage of electric cable.

As shown in Figure 7b, the plate 502 has at its center a recess 508 which cooperates with the recess of the cylinder 504 of the annular section. The recess of 508 is of the same diameter as the inside diameter of the annular section.

Four passages 510 are formed at the corners of a rectangle centered on the center of the plate 502. The passages 510 allow the fixing by screw and bolt of the plate 502 on the frame 2.

Four other passages 512 are formed in the plate at the corners of a rectangle centered on the center of the plate 502. The passages 512 allow the insertion of the damping device 550 which opens on the opposite side to the cylinder 504 with respect to the z axis.

The plane orthogonal to the main plane and extending in the longitudinal direction of the plate and passing through the middle of the width of the rectangle forming the plate is a plane of symmetry of the device 500.

The plane orthogonal to the main plane and extending in the direction transverse to the longitudinal direction of the plate and passing through the middle of the length of the rectangle forming the plate is a plane of symmetry of the device 500.

On the side of the plate 502 opposite the cylinder 504 with respect to the axis z, the device 500 has four stops 506 distributed symmetrically with respect to the two planes of symmetry of the device 500.

More specifically, a stop 506 has a right-angled triangle section whose right angle is disposed at one end of the rectangle forming the plate 502, one side of the right angle being oriented in the longitudinal direction of the plate, the other side the right angle being directed in the direction of the axis z opposite to the cylinder 504. The stop has an extension of the right triangle in the direction of the width of the rectangle forming the plate 502.

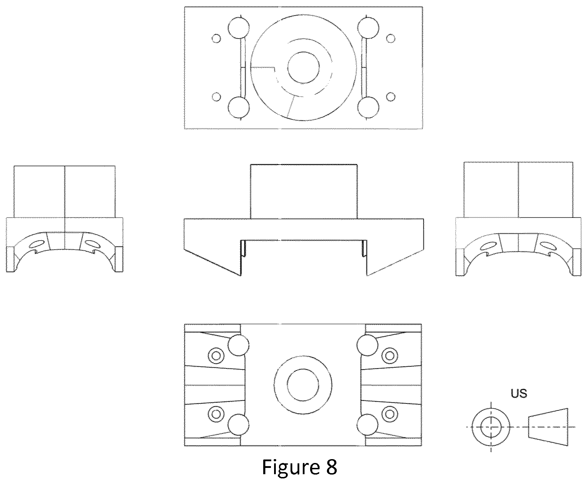

Figure 8 shows the device 500 in a multi-view projection, front, top and bottom, left and right, according to the US *third-angle* projection.

In a vertical section transverse to the longitudinal direction of the plate 502, the plate 502 is hollowed out on a lower central portion to form a "Π" which upper left and right interior angles are provided with fillets.

## Claims

1. Robot comprising
a first axle housing (200) and a second axle housing (100), a first axle housing comprising a first transversal axle connected to a rigid structure (2) by a hinge having a first degree of freedom in rotation around a first axis which is vertical and, a second degree of freedom in rotation around a second axis which is perpendicular to the first axis and to the first transversal axis,
and the axle of the first transversal axle being equipped on either side with a motor (210, 230), wherein each motor having a stator part configured to be fixed to the first transversal axle and a rotor part configured to be rotatably mounted to a respective wheel (202, 204) to provide steering and propulsion functions, and
an angular sensor of an angle formed by the transverse axle relative to the frame, wherein the angular sensor comprises a flag fixed in rotation with the first axis and a rangefinder to measure a distance between the flag and a fixed point of the rigid structure.

2. Robot according to claim 1, wherein said robot is further arranged to receive electronic controls (300) configured to control each of the motors fitted to said axle housing.

3. Robot according to claim 2, wherein the electronic controls are configured to drive each motor independently.

4. Robot according to claim 1, wherein the hinge is placed on the center of the transversal axis.

5. Robot according to claim 1, wherein its center of gravity is located between the four wheels (102, 104, 202, 204).

6. Robot according to claim 1, wherein the chassis (2) is a shell that goes down between the two axles to lower the center of gravity.

7. Robot according to claim 1, wherein the shell is a rigid structure.

8. Robot according to claim 1, comprising a unique battery.

9. Robot according to claim 1, comprising a frontal cutting module located between two wheels (102, 104), and wherein the two other wheels (202, 204) are steering wheels.

10. Robot according to claim 1, wherein the four wheels (102, 104, 202, 204) are driving wheels.

11. Robot according to claim 2, wherein the electronic controls are configured to implement a robot moving strategy towards a predetermined destination point by minimization of the distance to the predetermined destination point, the strategy being locally random.

12. Robot according to claim 2, comprising means for detecting an obstacle.

13. Robot according to claim 12, wherein the means for detecting the obstacle are configured to detect an obstacle by combination of two or more of the following parameters:
- counter electromotive force of one of the motors;
- differential of inertial components for detection of acceleration and / or acceleration variation;
- angular sensor of steering wheels,
- geographical localization.

14. Robot according to claim 11, wherein the electronic controls (300) are configured to invert the direction of movement of the robot when an obstacle is detected.

15. Robot according to claim 11, comprising a frontal cutting module place between two wheels, and wherein, in the event that the obstacle detected is on the side of the cutting tool, the electronic controls are configured to stop the robot and to select a steering direction to circumvent the obstacle before inverting the direction of the movement.

16. Robot according to claim 1, comprising a stop device (500) for circumscribing in space the displacements of the rear axle.

17. Robot according to claim 16, wherein the stop device comprises a plate (502) of rectangular shape defining a main plane and a center of the rectangular shape.

18. Robot according to claim 17, wherein the plane orthogonal to the main plane and extending in the longitudinal direction of the plate and passing through the center of the rectangle is a plane of symmetry of the stop device (500).

19. Robot according to any one of claims 17 or 18, wherein the plane orthogonal to the main plane and extending in the direction transverse to the longitudinal direction of the plate and passing through the center of the rectangle is a plane of symmetry of the stop device (500).

20. Robot according to any one of claims 17 to 19, wherein four screw passages (510) are formed at the corners of a rectangle centered on the center of the plate (502).

21. Robot according to any one of claims 17 to 20, wherein four damper passages (512) are formed in the plate at the corners of a rectangle centered on the center of the plate (502).

22. Robot according to claim 17 to 21, wherein the stop device (500) has four stops (506) distributed symmetrically with respect to the two planes of symmetry of the stop device (500).

23. Robot according to claim 22, wherein a stop (506) has a right-angled triangle section whose right angle is disposed at one end of the rectangle forming the plate (502), one side of the right angle being oriented in the longitudinal direction of the plate, the other side the right angle being directed in the direction of a longitudinal plane perpendicular to the main plane.

24. Robot according to claim 23, wherein in a vertical section transverse to the longitudinal direction of the plate (502), the plate (502) is hollowed out on a lower central portion to form a "Π" which upper left and right interior angles are provided with fillets.

## Patentansprüche

1. Roboter, umfassend
ein erstes Achsgehäuse (200) und ein zweites Achsgehäuse (100), wobei das erste Achsgehäuse eine erste Querachse umfasst, die mit einer starren Struktur (2) durch ein Scharnier verbunden ist, das einen ersten Freiheitsgrad bei der Drehung um eine erste, vertikale Achse und einen zweiten Freiheitsgrad bei der Drehung um eine zweite Achse aufweist, die senkrecht zur ersten Achse und zur ersten Querachse verläuft,
und die Achse der ersten Querachse auf jeder Seite mit einem Motor (210, 230) ausgestattet ist, wobei jeder Motor einen Statorteil, der konfiguriert ist, um an der ersten Querachse befestigt zu werden, und einen Rotorteil aufweist, der konfiguriert ist, um drehbar an einem jeweiligen Rad (202, 204) angebracht zu werden, um Lenk- und Antriebsfunktionen bereitzustellen, und
einen Winkelsensor eines Winkels, der durch die Querachse relativ zum Rahmen gebildet wird, wobei der Winkelsensor eine Fahne, die in Rotation mit der ersten Achse befestigt ist, und einen Entfernungsmesser umfasst, um einen Abstand zwischen der Fahne und einem festen Punkt der starren Struktur zu messen.

2. Roboter nach Anspruch 1, wobei der Roboter weiter angeordnet ist, um elektronische Steuereinrichtungen (300) aufzunehmen, die konfiguriert sind, um jeden der am Achsgehäuse angebrachten Motoren zu steuern.

3. Roboter nach Anspruch 2, wobei die elektronischen Steuereinrichtungen konfiguriert sind, um jeden Motor unabhängig voneinander anzutreiben.

4. Roboter nach Anspruch 1, wobei das Scharnier in der Mitte der Querachse angeordnet ist.

5. Roboter nach Anspruch 1, wobei sein Schwerpunkt zwischen den vier Räder (102, 104, 202, 204) angeordnet ist.

6. Roboter nach Anspruch 1, wobei das Fahrgestell (2) eine Schale ist, die zwischen den beiden Achsen heruntergeht, um den Schwerpunkt zu senken.

7. Roboter nach Anspruch 1, wobei die Schale eine starre Struktur ist.

8. Roboter nach Anspruch 1, umfassend eine einzige Batterie.

9. Roboter nach Anspruch 1, umfassend ein zwischen zwei Rädern (102, 104) angeordnetes frontales Schneidmodul, und wobei die beiden anderen Räder (202, 204) Lenkräder sind.

10. Roboter nach Anspruch 1, wobei die vier Räder (102, 104, 202, 204) Antriebsräder sind.

11. Roboter nach Anspruch 2, wobei die elektronischen Steuereinrichtungen konfiguriert sind, um eine Strategie zur Bewegung des Roboters zu einem vorbestimmten Zielpunkt durch Minimierung des Abstands zu dem vorbestimmten Zielpunkt umzusetzen, wobei die Strategie lokal zufällig ist.

12. Roboter nach Anspruch 2, umfassend Mittel zur Erkennung eines Hindernisses.

13. Roboter nach Anspruch 12, wobei die Mittel zur Erkennung des Hindernisses konfiguriert sind, um ein Hindernis durch Kombination von zwei oder mehr der folgenden Parameter zu erkennen:
- elektromotorische Gegenkraft eines der Motoren;
- Differenzial von Trägheitskomponenten zur Erfassung von Beschleunigung und/oder Beschleunigungsschwankungen;
- Winkelsensor der Lenkräder,
- geografische Lokalisierung.

14. Roboter nach Anspruch 11, wobei die elektronischen Steuereinrichtungen (300) konfiguriert sind, um die Bewegungsrichtung des Roboters umzukehren, wenn ein Hindernis erkannt wird.

15. Roboter nach Anspruch 11, umfassend ein frontales Schneidmodul, das zwischen zwei Rädern angeordnet ist, und wobei für den Fall, dass sich das erkannte Hindernis auf der Seite des Schneidwerkzeugs befindet, die elektronische Steuerung konfiguriert ist, um den Roboter anzuhalten und eine Lenkrichtung zu wählen, um das Hindernis zu umgehen, bevor sie die Bewegungsrichtung umkehrt.

16. Roboter nach Anspruch 1, umfassend eine Anschlagvorrichtung (500) zur räumlichen Eingrenzung der Verschiebungen der Hinterachse.

17. Roboter nach Anspruch 16, wobei die Anschlagvorrichtung eine Platte (502) mit rechteckiger Form umfasst, die eine Hauptebene und einen Mittelpunkt der rechteckigen Form definiert.

18. Roboter nach Anspruch 17, wobei die zur Hauptebene orthogonale Ebene, die sich in Längsrichtung der Platte erstreckt und durch den Mittelpunkt des Rechtecks geht, eine Symmetrieebene der Anschlagvorrichtung (500) ist.

19. Roboter nach einem der Ansprüche 17 oder 18, wobei die zur Hauptebene orthogonale Ebene, die sich in der Richtung quer zur Längsrichtung der Platte erstreckt und durch den Mittelpunkt des Rechtecks verläuft, eine Symmetrieebene der Anschlagvorrichtung (500) ist.

20. Roboter nach einem der Ansprüche 17 bis 19, wobei vier Schraubendurchgänge (510) an den Ecken eines auf die Mitte der Platte (502) zentrierten Rechtecks ausgebildet sind.

21. Roboter nach einem der Ansprüche 17 bis 20, wobei vier Dämpferdurchgänge (512) in der Platte an den Ecken eines auf die Mitte der Platte (502) zentrierten Rechtecks ausgebildet sind.

22. Roboter nach einem der Ansprüche 17 bis 21, wobei die Anschlagvorrichtung (500) vier Anschläge (506) aufweist, die symmetrisch in Bezug auf die beiden Symmetrieebenen der Anschlagvorrichtung (500) verteilt sind.

23. Roboter nach Anspruch 22, wobei ein Anschlag (506) einen rechtwinkligen Dreiecksquerschnitt aufweist, dessen rechter Winkel an einem Ende des die Platte (502) bildenden Rechtecks angeordnet ist, wobei eine Seite des rechten Winkels in der Längsrichtung der Platte ausgerichtet ist und die andere Seite des rechten Winkels in Richtung einer zur Hauptebene senkrechten Längsebene gerichtet ist.

24. Roboter nach Anspruch 23, wobei in einem vertikalen Schnitt quer zur Längsrichtung der Platte (502) die Platte (502) an einem unteren Mittelteil ausgehöhlt ist, um ein "II" zu bilden, dessen obere linke und rechte Innenwinkel mit Ausrundungen versehen sind.

## Revendications

1. Robot comprenant
un premier carter d'essieu (200) et un deuxième carter d'essieu (100), un premier essieu
comprenant un premier essieu transversal relié à une structure rigide (2) par une articulation ayant un premier degré de liberté en rotation autour d'un premier axe qui est vertical et, un deuxième degré de liberté en rotation autour d'un deuxième axe qui est perpendiculaire au premier axe et au premier essieu transversal,
et l'essieu du premier essieu transversal étant équipé de chaque côté d'un moteur (210, 230), chaque moteur comportant une partie statorique configurée pour être fixée au premier essieu transversal et une partie rotorique configurée pour être montée de manière rotative sur une roue respective (202, 204) afin d'assurer les fonctions de direction et de propulsion, et
un capteur angulaire d'un angle formé par l'essieu transversal par rapport à le châssis, dans lequel le capteur angulaire comprend un drapeau fixé en rotation avec le premier axe et un télémètre pour mesurer une distance entre le drapeau et un point fixe de la structure rigide.

2. Robot selon la revendication 1, dans lequel ledit robot est en outre agencé pour recevoir des commandes électroniques (300) configurées pour commander chacun des moteurs montés sur ledit carter d'essieu.

3. Robot selon la revendication 2, dans lequel les commandes électroniques sont configurées pour entraîner chaque moteur indépendamment.

4. Robot selon la revendication 1, dans lequel la charnière est placée au centre de l'axe transversal.

5. Robot selon la revendication 1, dans lequel son centre de gravité est situé entre le quatre roues (102, 104, 202, 204).

6. Robot selon la revendication 1, dans lequel le châssis (2) est une coque qui descend entre les deux essieux afin d'abaisser le centre de gravité.

7. Robot selon la revendication 1, dans lequel la coque est une structure rigide.

8. Robot selon la revendication 1, comprenant une batterie unique.

9. Robot selon la revendication 1, comprenant un module de coupe frontal situé entre deux roues (102, 104), et dans lequel les deux autres roues (202, 204) sont directrices.
roues.

10. Robot selon la revendication 1, dans lequel les quatre roues (102, 104, 202, 204) sont des roues motrices.

11. Robot selon la revendication 2, dans lequel les commandes électroniques sont configurées pour mettre en œuvre une stratégie de déplacement du robot vers un point de destination prédéterminé en minimisant la distance jusqu'au point de destination prédéterminé, la stratégie étant localement aléatoire.

12. Robot selon la revendication 2, comprenant des moyens pour détecter un obstacle.

13. Robot selon la revendication 12, dans lequel les moyens de détection d'obstacle sont configurés pour détecter un obstacle par combinaison de deux ou plusieurs des paramètres suivants :
- contre-force électromotrice de l'un des moteurs ;
- différentiel des composants inertiels pour la détection de l'accélération et/ou de la variation d'accélération ;
- capteur angulaire des volants de direction,
- localisation géographique.

14. Robot selon la revendication 11, dans lequel les commandes électroniques (300) sont configurées pour inverser le sens de déplacement du robot lorsqu'un obstacle est détecté.

15. Robot selon la revendication 11, comprenant un module de coupe frontal placé entre deux roues, et dans lequel, dans le cas où l'obstacle détecté se trouve sur le côté de l'outil de coupe, les commandes électroniques sont configurées pour arrêter le robot et sélectionner une direction de conduite pour contourner l'obstacle avant d'inverser le sens du mouvement.

16. Robot selon la revendication 1, comprenant un dispositif d'arrêt (500) pour circonscrire dans l'espace les déplacements de l'essieu arrière.

17. Robot selon la revendication 16, dans lequel le dispositif d'arrêt comprend une plaque (502) de forme rectangulaire définissant un plan principal et un centre de la forme rectangulaire.

18. Robot selon la revendication 17, dans lequel le plan orthogonal au plan principal et s'étendant dans la direction longitudinale de la plaque et passant par le centre du rectangle est un plan de symétrie du dispositif d'arrêt (500).

19. Robot selon l'une quelconque des revendications 17 ou 18, dans lequel le plan orthogonal au plan principal et s'étendant dans la direction transversale à la direction longitudinale de la plaque et passant par le centre du rectangle est un plan de symétrie du dispositif d'arrêt (500).

20. Robot selon l'une quelconque des revendications 17 à 19, dans lequel quatre passages de vis (510) sont formés aux coins d'un rectangle centré sur le centre de la plaque (502).

21. Robot selon l'une quelconque des revendications 17 à 20, dans lequel quatre passages d'amortissement
(512) sont formés dans la plaque aux coins d'un rectangle centré sur le centre de la plaque (502).

22. Robot selon l'une quelconque des revendications 17 à 21, dans lequel le dispositif d'arrêt (500) comporte quatre butées
(506) répartis symétriquement par rapport aux deux plans de symétrie du dispositif d'arrêt (500).

23. Robot selon la revendication 22, dans lequel une butée (506) présente une section triangulaire à angle droit dont l'angle droit est disposé à une extrémité du rectangle formant la plaque (502), un côté de l'angle droit étant orienté dans la direction longitudinale de la plaque, l'autre côté de l'angle droit étant dirigé dans la direction d'un plan longitudinal perpendiculaire au plan principal.

24. Robot selon la revendication 23, dans lequel, dans une section verticale transversale à la direction longitudinale de la plaque (502), la plaque (502) est évidée sur une partie centrale inférieure pour former un « N » dont les angles intérieurs supérieurs gauche et droit sont pourvus de congés.
